# EUROPÄISCHE PATENTSCHRIFT

(11) **EP 4 389 615 B1**
(45) Veröffentlichungstag und Bekanntmachung des Hinweises auf die Patenterteilung: **01.10.2025**
(21) Anmeldenummer: 22214506.2
(22) Anmeldetag: 19.12.2022
(51) Int. Cl.: B64F 5/10, B23P 19/06, B21J 15/14, B21J 15/32, B21J 15/42, B25J 11/00, B25J 15/00, B25J 9/16, G05B 19/418

(54) **VERFAHREN UND MONTAGESYSTEM ZUR MONTAGE EINES PROFILBAUTEILS AUF EINEM FLUG-ZEUGSTRUKTURBAUTEIL**
METHOD AND MOUNTING SYSTEM FOR MOUNTING A PROFILED COMPONENT ON AN AIRCRAFT STRUCTURAL COMPONENT
PROCÉDÉ ET SYSTÈME DE MONTAGE POUR LE MONTAGE D'UN COMPOSANT PROFILÉ SUR UN COMPOSANT STRUCTURAL D'AÉRONEF

(43) Veröffentlichungstag der Anmeldung: 26.06.2024
(73) Patentinhaber: Airbus Operations GmbH, 21129 Hamburg (DE)
(72) Erfinder: Zahlen, Pierre, 21129 Hamburg (DE); Timmann, Philipp, 21129 Hamburg (DE)
(74) Vertreter: Schornack, Oliver

(56) Entgegenhaltungen:
- US-A1- 2017 312 923
- US-A1- 2020 361 079
- US-A1- 2021 339 888

## Beschreibung

Die Erfindung betrifft ein Verfahren zur Montage eines Profilbauteils an einem Rahmenstrukturbauteil eines Flugzeugs und ein entsprechendes Montagesystem zum Durchführen des Verfahrens. Insbesondere betrifft die Erfindung ein Verfahren und Montagesystem zur Montage eines Profilbauteils auf ein innenliegendes Rahmenstrukturbauteil, wobei das Profilbauteil durch eine Greifvorrichtung gehalten wird, die von einem Bereich außerhalb des Flugzeugs durch eine Öffnung in das Flugzeug bewegt wird, und auf dem Rahmenstrukturbauteil angebracht wird.

Rahmenstrukturbauteile eines Flugzeugs sind im Inneren eines Flugzeugs angeordnete Rahmenbauteile, wie zum Beispiel Spante (Rahmen), Stringer oder Ähnliches, die teilweise zusammengesetzt werden müssen oder verstärkt werden müssen. Hierfür werden Profilbauteile, wie zum Beispiel Kupplungen ("Couplings"), Aufdopplungen und Ähnliches auf ein oder mehrere Rahmenbauteile gesetzt und mit dem Rahmenbauteil verbunden.

Diese Arbeiten finden jedoch meist in Bereichen des Flugzeugs statt, die schwer erreichbar sind oder zumindest aus ergonomischen Gesichtspunkten für das Personal ungünstig liegen. Die Verbindung der Rahmenbauteile mit entsprechenden Profilbauteilen erfolgt zum Beispiel durch Kleben, Verschrauben, Vernieten oder auch Verklemmen. Die hierfür benötigten Werkzeuge sind meist schwer oder zumindest unhandlich, wodurch der Einbau für das Personal weiter erschwert wird.

Hintergrundinformationen zu Arbeiten in eingeschränkt zugänglichen Räumen finden sich zum Beispiel in US 2017/312923 A1, US 2020/361079 A1, und US 2021/339888 A1. In US 2017/312923 A1 wird ein Roboterarm mit einer Festziehvorrichtung durch eine Öffnung in einer Flugzeugtragfläche geführt, um einen Holmgurt mit Muttern zu befestigen.

Der Erfindung liegt daher die Aufgabe zugrunde, ein Verfahren und Montagesystem zur einfacheren Montage von Profilbauteilen bereitzustellen.

Diese Aufgabe wird durch ein Verfahren mit den Merkmalen des Anspruchs 1 sowie ein Montagesystem mit den Merkmalen des Anspruchs 6 gelöst.

Gemäß einem ersten Aspekt zum besseren Verständnis der vorliegenden Offenbarung umfasst ein Verfahren zur Montage eines Profilbauteils auf ein innenliegendes Rahmenstrukturbauteil eines Flugzeugs eine Reihe von Arbeitsschritten. Das Verfahren beginnt mit einem Aufnehmen eines Profilbauteils durch eine an einem Werkzeughalter angeordnete Greifvorrichtung. Bei dem Profilbauteil kann es sich um eine Kupplung ("coupling"), Aufdopplung, Winkel, Lasche o. ä. handeln. Das Profilbauteil kann aber auch ein Fensterrahmen oder ein Teil eines Fensterrahmens oder ein Teil einer Außenhaut sein. Das Rahmenstrukturbauteil wiederum kann zum Beispiel ein Spant (Rahmen), Stringer, Fensterrahmen, Tragfläche, Tragflächenkasten ("wing box"), eine Außenhaut oder Ähnliches oder ein oder mehrere Teile/Abschnitte dieser Rahmenstrukturbauteile sein. Das Verfahren eignet sich somit auch zur Bildung von Abschnitten eines Flugzeugrumpfs und/oder zur Verbindung zweier Abschnitte eines Flugzeugrumpfs, wie zum Beispiel ein Aneinanderfügen zweier tonnenförmiger Rumpfabschnitte.

Das Verfahren fährt mit einem Führen des Werkzeughalters durch eine Öffnung in einer Außenhaut des Flugzeugs in das Innere des Flugzeugs fort, wobei das Führen des Werkzeughalters durch einen Roboterarm erfolgt. Die Öffnung in der Außenhaut des Flugzeugs kann jegliche vorhandene Öffnung in der Außenhaut sein. Beispielhaft sind hier Fensteröffnungen, Türöffnungen, Ladeluken, Serviceöffnungen oder auch ein Mannloch genannt, die gegebenenfalls bereits im Flugzeugrumpf vorhanden sind. Dadurch müssen keine zusätzlichen Öffnungen für die Montage geschaffen werden.

Anschließend folgen die Verfahrensschritte eines Ausrichtens des Profilbauteils durch den Werkzeughalter relativ zu dem Rahmenstrukturbauteil, eines Anordnens des Profilbauteils in einer Einbauposition auf dem Rahmenstrukturbauteil, und eines Fixierens des Profilbauteils an dem Rahmenstrukturbauteil in der Einbauposition mit einem ersten Befestigungsmittel. Das Ausrichten des Profilbauteils betrifft insbesondere eine ungefähre (grobe) Anordnung des Profilbauteils neben dem Rahmenstrukturbauteil und ist meist durch unterschiedliche Ausrichtungen des Profilbauteils während des Führens des Profilbauteils durch die Öffnung einerseits und der zu erzielenden Einbauposition andererseits bedingt. Das Ausrichten kann zum Beispiel durch eine beliebige Bewegung des Roboterarms und/oder des Werkzeughalters und/oder der Greifvorrichtung erfolgen, wie zum Beispiel eine Rotation um eine oder mehrere Achsen und/oder eine lineare Bewegung und/oder eine kurvenförmige Bewegung.

Das Anordnen des Profilbauteils kann wie das Ausrichten eine beliebige Bewegung umfassen, die durch den Roboterarm und/oder den Werkzeughalter und/oder die Greifvorrichtung durchgeführt wird. Hierbei wird das Profilbauteil in seine Einbauposition gebracht, zum Beispiel eine Position, in der das Profilbauteil auf dem Rahmenstrukturbauteil aufliegt oder anliegt. Das Anordnen des Profilbauteils kann (im Unterschied zum Ausrichten) ein Aufsetzen, Anlegen oder anderweitiges Positionieren des Profilbauteils relativ zu dem Rahmenstrukturbauteil umfassen.

Daher ist das Fixieren des Profilbauteils an dem Rahmenstrukturbauteil in der Einbauposition möglich. Für das Fixieren des Profilbauteils ist es ausreichend, dass ein erstes Befestigungsmittel eingesetzt wird, wobei es sich insbesondere um ein einzelnes erstes Befestigungsmittel handeln kann. Dadurch kann das Profilbauteil in der Einbauposition gehalten werden.

Nach der Fixierung des Profilbauteils kann das Verfahren mit folgenden Schritten fortfahren: Lösen der Greifvorrichtung von dem Profilbauteil, und Befestigen des Profilbauteils an dem Rahmenstrukturbauteil mit mindestens einem zweiten Befestigungsmittel. Durch das Lösen der Greifvorrichtung ist die äußere Oberfläche des Profilbauteils frei zugänglich, sodass weitere Befestigungsmittel, insbesondere mindestens ein zweites Befestigungsmittel, angebracht werden können. Beispielsweise kann eine Vielzahl von zweiten Befestigungsmitteln angebracht werden.

Ferner wird das erste und zweite Befestigungsmittel durch eine an dem Werkzeughalter angeordnete Befestigervorrichtung angebracht. Dies ermöglicht eine kompakte Bauform der notwendigen Montagevorrichtungen an dem freien Ende des Roboterarms, also eine kompakte Bauform des Endeffektors des Roboters. Durch die Anordnung der Befestigervorrichtung und der Greifvorrichtung an dem Werkzeughalter kann einerseits das erste Befestigungsmittel angebracht werden, während die Greifvorrichtung das Profilbauteil festhält. Andererseits kann nach dem Lösen der Greifvorrichtung die Befestigervorrichtung ungehindert und an jeder beliebigen Position des Profilbauteils operieren.

Insgesamt lässt sich durch das Verfahren das Profilbauteil auf einfache Weise an der richtigen Stelle (Einbauposition) anbringen. Das Verfahren ermöglicht ferner eine Automatisierung oder Semi-Automatisierung des Einbauprozesses. Da ein Teil des Roboterarms außerhalb des Flugzeugs angeordnet ist, und insbesondere der Fuß des Roboters außerhalb des Flugzeugs angeordnet ist, vereinfacht das Verfahren zusätzlich die Anbringung von Profilbauteilen. Die üblicherweise notwendigen Konstruktionen und Vorarbeiten im Inneren des Flugzeugs, um Werkzeuge im Inneren des Flugzeugs zu führen und zu bedienen, entfallen. Auch muss das mit dem Einbau beauftragte Personal weniger Werkzeuge tragen und führen, wie zum Beispiel die Befestigervorrichtung.

In einer Ausgestaltungsvariante können das erste Befestigungsmittel und das zweite Befestigungsmittel vom gleichen Typ sein. Die Bauform des ersten und zweiten Befestigungsmittels ist dabei identisch. Lediglich die zeitliche Reihenfolge des Anbringens an dem Profilbauteil und Rahmenstrukturbauteil unterscheidet das erste und zweite Befestigungsmittel. Dies erlaubt die Verwendung einer reduzierten Anzahl von Elementen bei der Befestigung des Profilbauteils.

In einer anderen Ausgestaltungsvariante kann das Verfahren ferner ein Anbringen eines Anschlags an dem Rahmenstrukturbauteil vor dem Ausrichten des Profilbauteils und/oder vor dem Anordnen des Profilbauteils in der Einbauposition umfassen. Dieser Anschlag vereinfacht das Ausrichten und/oder Anordnen des Profilbauteils in der Einbauposition, da ein mechanischer Anschlag gegeben ist. Beispielsweise kann das Profilbauteil an den Anschlag angelegt werden, während die Greifvorrichtung das Profilbauteil hält. Somit wird nicht nur das Finden der Einbauposition erleichtert und eine (Semi-) Automatisierung ermöglicht. Zudem kann der Anschlag auch eine gewisse (temporäre) Haltefunktion übernehmen, insbesondere nachdem das erste Befestigungsmittel das Profilbauteil fixiert.

Auch lässt sich der Anschlag zeitlich unabhängig von dem Einbringen des Profilbauteils vornehmen. Dadurch lassen sich vorbereitende Arbeiten unabhängig von dem Anbringen des Profilbauteils durchführen, sobald das Rahmenstrukturbauteil für solche vorbereitenden Arbeiten zur Verfügung steht.

Selbstverständlich kann ein Anschlag auch in Form eines weiteren Elements vorliegen, an dem das Profilbauteil mechanisch wirksam anliegen kann. Lediglich beispielhaft kann ein bereits angebrachtes anderes Profilbauteil, ein weiteres Rahmenstrukturbauteil o. ä. ein weiteres Element bilden, das während des Anordnens des Profilbauteils eine mechanische Stütze für das Profilbauteil bildet. Ebenfalls lediglich beispielhaft können Stirnseiten oder Seitenkanten o. ä. des Profilbauteils und des weiteren Elements aneinander anliegen, wodurch das weitere Element einen Anschlag bildet.

In einer weiteren Ausgestaltungsvariante kann das Anbringen des Anschlags durch die Befestigervorrichtung erfolgen. Zum Beispiel kann die Befestigervorrichtung den Anschlag anbringen, bevor das Profilbauteil ausgerichtet wird und/oder vor dem Anordnen des Profilbauteils in der Einbauposition. Dadurch lässt sich ebenfalls eine gewisse (Semi-) Automatisierung verwirklichen. Andererseits müssen auch weniger Werkzeuge eingesetzt werden, um das Profilbauteil zu setzen.

Alternativ oder zusätzlich kann der Anschlag ein Befestigungsmittel sein. Dadurch lässt sich die Anzahl der notwendigen Bauteile verringern. Zudem ist sichergestellt, dass das Befestigungsmittel für das Rahmenstrukturbauteil geeignet ist, wodurch keine zusätzliche Eignungsprüfung (Zertifizierung) des Anschlags notwendig ist. Da der Anschlag am Rahmenstrukturbauteil angebracht wird, bevor das Profilbauteil damit verbunden wird, kann das Befestigungsmittel (der Anschlag) nach dem vollständigen Befestigen des Profilbauteils an dem Rahmenstrukturbauteil auch lediglich in dem Rahmenstrukturbauteil vorhanden sein und keine tatsächliche Befestigungsfunktion übernehmen.

In einer anderen Ausgestaltungsvariante kann das Profilbauteil eine Form aufweisen, die mit dem Anschlag korrespondiert oder zusammenwirkt. Beispielsweise kann der Anschlag von einer Oberfläche des Rahmenstrukturbauteils hervorstehen, während das Profilbauteil eine dem Rahmenstrukturbauteil zugewandte Vertiefung oder Öffnung aufweist, die den Anschlag zumindest teilweise umgibt, bedeckt oder daran anliegt, wenn das Profilbauteil in der Endposition ist. Zum Beispiel kann das Profilbauteil auch eine Seitenkante aufweisen, deren Verlauf bei Anordnung des Profilbauteils in der Endposition den Anschlag zumindest abschnittsweise umgibt und/oder daran anliegt. Mit anderen Worten kann mindestens eine Seitenkante des Profilbauteils an dem Anschlag anliegen, sodass das Profilbauteil mit einer Seitenkante an dem Anschlag gleiten kann (zum Beispiel für einen Toleranzausgleich) oder mit zwei Seitenkanten an dem Anschlag anliegen kann und nur in eine Richtung entlang einer Seitenkante gleiten kann. Selbstverständlich können mehr Seiten des Profilbauteils oder andere Formen und Flächen des Profilbauteils vorhanden sein, die mechanisch mit dem Anschlag zusammenwirkt wirkende. Insgesamt wird insbesondere das Ausrichten und Anordnen des Profilbauteils in der Einbauposition erleichtert, und der Anschlag verhindert auch ein Verrutschen des Profilbauteils während des Fixierens und bis zum Befestigen des Profilbauteils.

In noch einer weiteren Ausgestaltungsvariante kann das Verfahren ein Zurückfahren des Werkzeughalters durch die Öffnung umfassen. Beispielsweise kann der Roboterarm den Werkzeughalter durch die Öffnung wieder zurückführen, um das Verfahren zu wiederholen und ein weiteres Profilbauteil aufzunehmen und im Inneren des Flugzeugs zu befestigen.

In einer anderen Ausgestaltungsvariante kann das Profilbauteil in der Einbauposition das Rahmenstrukturbauteil mit einem weiteren Rahmenstrukturbauteil verbinden, und/oder das Rahmenstrukturbauteil verstärken, und/oder ein Anschlusselement an dem Rahmenstrukturbauteil für eine Flugzeugkomponente bilden. Somit ist das Profilbauteil eine Kupplung, Kopplung, Verbinder, Verstärkungselement, Aufdopplung, Lasche, Winkel o. ä..

Gemäß einem zweiten Aspekt zum besseren Verständnis der vorliegenden Offenbarung umfasst ein Montagesystem zur Montage eines Profilbauteils auf ein innenliegendes Rahmenstrukturbauteil eines Flugzeugs einen Roboterarm, der außerhalb des Flugzeugs zu installieren ist, und einen Werkzeughalter, der an einem freien Ende des Roboterarms angeordnet ist. Der außerhalb des Flugzeugs installierte Roboterarm weist insbesondere einen Fuß auf, der außerhalb des Flugzeugs angeordnet ist und den Roboterarm trägt. Das freie Ende des Roboterarms ist ein dem Fuß entgegengesetztes Ende des Roboterarms.

Das Montagesystem umfasst ferner eine Greifvorrichtung, die an dem Werkzeughalter angeordnet ist, eine Befestigervorrichtung, die an dem Werkzeughalter angeordnet ist und dazu eingerichtet ist, Befestigungsmittel anzubringen, und eine Steuereinheit, die mit dem Roboterarm, dem Werkzeughalter, der Greifvorrichtung und der Befestigervorrichtung gekoppelt ist und dazu eingerichtet ist, das Verfahren gemäß dem ersten Aspekt oder einer seiner Ausgestaltungsvarianten durchzuführen. Die Steuereinheit ist insbesondere dazu eingerichtet, den Roboterarm, den Werkzeughalter und die Greifvorrichtung zu bewegen, sowie die Greifvorrichtung und die Befestigervorrichtung zu aktivieren und deaktivieren.

Ein Aktivieren der Greifvorrichtung findet insbesondere dann statt, wenn das Profilbauteil aufgenommen und gehalten wird. Ein Deaktivieren der Greifvorrichtung bedeutet ein Lösen der Greifvorrichtung von dem Profilbauteil. Zusätzlich kann ein Deaktivieren der Greifvorrichtung auch ein Entfernen der Greifvorrichtung von dem Profilbauteil umfassen.

Ein Aktivieren der Befestigervorrichtung umfasst beispielsweise das Anlegen einer Spannung an einen Aktuator oder Motor der Befestigervorrichtung, um ein Befestigungsmittel zu setzen.

In einer Ausgestaltungsvariante kann die Greifvorrichtung einen Haltebügel umfassen, der dazu eingerichtet ist, dass Profilbauteil von mindestens einer Seite zu stützen und in der Einbauposition auf dem Rahmenstrukturbauteil zu halten. Der Haltebügel kann das Profilbauteil zumindest abschnittsweise umgeben. Ferner kann der Haltebügel an dem Profilbauteil anliegen oder anderweitig mit dem Profilbauteil mechanisch gekoppelt sein.

Alternativ oder zusätzlich kann die Greifvorrichtung mindestens eine Anpresseinheit umfassen, die dazu eingerichtet ist, das Profilbauteil in der Einbauposition auf das Rahmenstrukturbauteil zu pressen. So kann die Anpresseinheit das Anordnen und Fixieren des Profilbauteils unterstützen. Die Anpresseinheit kann beispielsweise einen oder mehrere Federelemente, Aktuatoren, Motoren o. ä. umfassen, womit das Profilbauteil durch die mindestens eine Anpresseinheit in der Endposition gehalten wird. Lediglich beispielhaft kann die Anpresseinheit so gestaltet und angeordnet sein, dass sie sich an dem Werkzeughalter und/oder der Greifvorrichtung und/oder dem Haltebügel abstützt und eine Federkraft auf das Profilbauteil aufbringt. Diese Federkraft kann vorzugsweise auf das Profilbauteil in der Richtung einwirken, in der das Rahmenstrukturbauteil liegt.

Die Anpresseinheit kann ferner ein Anpresskissen, Polster oder eine ähnliche Auflage umfassen, das/die an dem Profilbauteil anliegt. Dadurch lässt sich eine Oberfläche des Profilbauteils schützen.

Ebenfalls alternativ oder zusätzlich kann die Greifvorrichtung mindestens eine Klemmvorrichtung umfassen, die dazu eingerichtet ist, das Profilbauteil lösbar in der Greifvorrichtung zu halten. Die Klemmvorrichtung kann entweder ein elastisches Element umfassen, das das Profilbauteil einklemmt, oder einen Aktuator umfassen, der dazu eingerichtet ist, dass Profilbauteil einzuklemmen oder freizugeben.

Ferner alternativ oder zusätzlich kann die Greifvorrichtung einen Magneten und/oder einen Saughalter umfassen. Bei einem Magneten umfasst das Profilbauteil zumindest ein magnetisches Material, wie zum Beispiel ein Metall, während bei einem Saughalter die Oberfläche des Profilbauteils an der entsprechenden Stelle möglichst glatt ist.

In einer Ausgestaltungsvariante kann die Befestigervorrichtung einen Bohrer, einen Nietsetzer, einen Schraubsetzer, einen Schrauber, einen Schweißkopf, und/oder eine Klebepistole umfassen. Mit anderen Worten ist das Befestigungsmittel ein Bolzen, Schraube, Gewindestange, etc., die durch eine von dem Bohrer gefertigte Bohrung durch das Profilbauteil und das Rahmenstrukturbauteil geführt werden kann, ein Niet, der durch den Nietsetzer durch das Profilbauteil und das Rahmenstrukturbauteil gesetzt wird, eine Schraube, die in das Material des Profilbauteils und des Rahmenstrukturbauteils (selbstschneidenden) geschraubt wird, oder ein Kleber, der über die Klebepistole aufgebracht wird. Im Fall eines Schweißkopfes ist das Befestigungsmittel eine Verschweißung des Materials des Profilbauteils mit dem Material des Rahmenstrukturbauteils. Falls notwendig kann auch zusätzliches Material zwischen Profilbauteil und Rahmenstrukturbauteil aufgebracht werden, welches durch den Schweißkopf geschmolzen wird und sich mit den Materialien des Profilbauteils und des Rahmenstrukturbauteil verbindet.

Selbstverständlich kann die Befestigervorrichtung auch Kombinationen der oben genannten Werkzeuge umfassen. Lediglich beispielhaft sind ein Bohrer und ein Nietsetzer erwähnt, wobei der Bohrer zunächst eine Bohrung vornimmt, durch die anschließend ein Niet gesetzt wird.

Die oben beschriebenen Aspekte, Ausgestaltungen, Varianten und Beispiele können selbstverständlich kombiniert werden, ohne dass dies explizit beschrieben ist. Jede der beschriebenen Ausgestaltungsvarianten und jedes Beispiel sind somit optional zu jedem der Aspekte, Ausgestaltungen, Varianten und Beispielen oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

Bevorzugte Ausführungsbeispiele der Erfindung werden nun anhand der beigefügten schematischen Zeichnungen näher erläutert, wobei:
- Figur 1: schematisch einen Ausschnitt eines Flugzeugs und ein Montagesystem im Einsatz zeigt;
- Figuren 2 bis 4: schematisch das Montagesystem aus Figur 1 im Detail und bei verschiedenen Arbeitsschritten zeigen;
- Figur 5: schematisch eine Ausgestaltungsvariante eines Werkzeughalters zeigt;
- Figur 6: schematisch eine weitere Ausgestaltungsvariante eines Werkzeughalters zeigt; und
- Figur 7: schematisch ein Ablaufdiagramm eines Verfahrens zur Montage eines Profilbauteils zeigt.

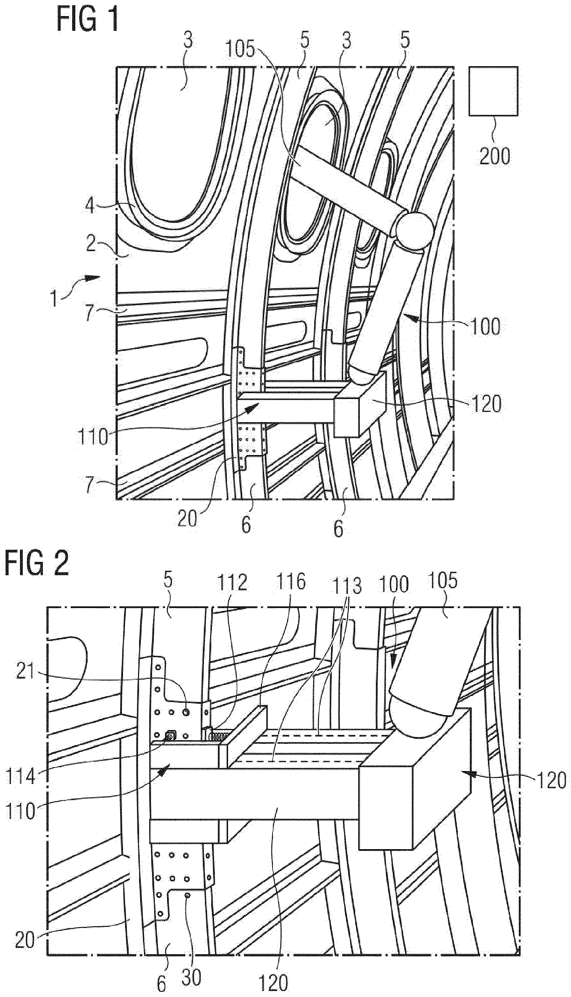

Figur 1 zeigt schematisch einen Ausschnitt eines Flugzeugs 1 und ein Montagesystem 100 im Einsatz. Das Flugzeug 1 befindet sich im Bau, wobei Rahmenstrukturbauteile bereits zusammengesetzt sind und weitere hinzugefügt werden müssen. Das Flugzeug 1 umfasst in dem dargestellten Zustand eine Vielzahl von Spanten 5, die lediglich beispielhaft aus einem oberen Spantabschnitt 5 und einem unteren Spantabschnitt 6 bestehen können. An ihrem Treffpunkt werden der obere und untere Spantabschnitt 5, 6 durch ein Profilbauteil, hier eine Kupplung 20 (oder Verbinder), verbunden und zusammengefügt. Das Profilbauteil 20 liegt dabei auf dem Rahmenstrukturbauteil 5, 6 auf, d.h. es liegt daran an, und umgibt das Rahmenstrukturbauteil 5, 6 teilweise.

Das Flugzeug 1 weist auch mindestens eine Öffnung 3 in einer Außenhaut 2 des Flugzeugs 1 auf. In dem dargestellten Abschnitt des Flugzeugs 1 sind zum Beispiel Fensteröffnungen 3 vorgesehen, die bereits mit Fensterrahmen 4 verstärkt sind. Neben der Außenhaut 1 können auch Stringer 7 zwischen den Spanten 5, 6 vorhanden sein.

Das Montagesystem 100 umfasst einen Roboterarm 105 mit daran angeordnetem Werkzeughalter 120, mit dem das Profilbauteil 20 auf dem Rahmenstrukturbauteil 5, 6 aufgebracht werden kann. Der Roboterarm 105 und/oder der Werkzeughalter 120 können dazu eingerichtet sein, das Profilbauteil 20 aufzunehmen und durch eine der Öffnungen 3 in der Außenhaut 2 in das Innere des Flugzeugs 1 zu führen. Der Rest des Roboterarms 105 bzw. Roboters liegt außerhalb des Flugzeugs 1 und ist in Figur 1 nicht erkennbar.

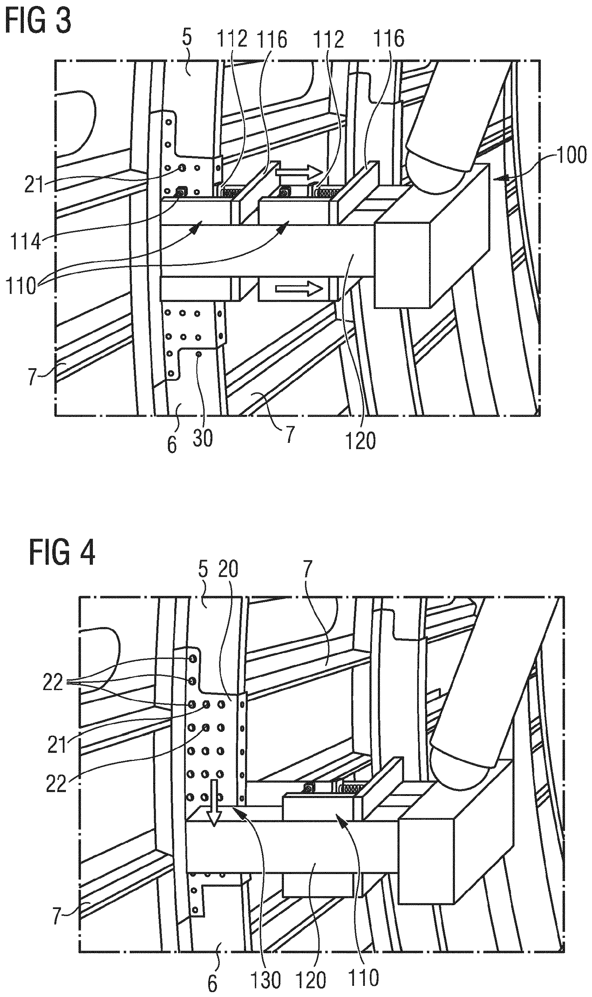

Durch den Werkzeughalter 120 kann das Profilbauteil 20 relativ zu dem Rahmenstrukturbauteil 5, 6 ausgerichtet werden und in einer Einbauposition angeordnet werden. Hierfür kann an dem Fahrzeughalter 120 eine Greifvorrichtung 110 (detaillierter in den Figuren 2 bis 4 dargestellt) vorgesehen sein, deren Lage in Figur 1 angedeutet ist. Figur 1 zeigt das Profilbauteil 20 in der Einbauposition und bereits in einem befestigten Zustand. Mit anderen Worten ist das Profilbauteil 20 zum Beispiel über eine Vielzahl von Befestigungsmitteln 22 (siehe Figur 4) an dem Rahmenstrukturbauteil 5, 6 befestigt. In dem hier vorliegenden Fall ist das Profilbauteil 20 mit beiden Spantabschnitten 5 und 6 verbunden bzw. daran befestigt und verbindet diese zu einem statisch durchgehenden Spant 5.

Auch wenn in den hier beigefügten Zeichnungen das Profilbauteil 20 an einem Spant 5, 6 befestigt wird, zeigt dies nur ein Beispiel eines Profilbauteils 20. Selbstverständlich kann ein Profilbauteil 20 auch auf einem Stringer 7, einem Fensterrahmen 4, einer Außenhaut 2 oder ähnlichem Rahmenstrukturbauteil angebracht und befestigt werden. Die hier beschriebenen Details sind gleichermaßen auf andere Rahmenstrukturbauteile anwendbar und übertragbar. Dabei kann das Profilbauteil 20 auch weitere oder andere Funktionen als das Zusammenfügen von Strukturbauteilen übernehmen. Beispielsweise kann das Profilbauteil 20 eine Lasche oder abstehenden Schenkel aufweisen, an der/dem weitere Flugzeugkomponenten und/oder -strukturbauteile befestigt werden können. Lediglich als Beispiel kann das Profilbauteil 20 auch Teil eines Fensterrahmens 4 bilden und/oder eine Befestigungslasche/-schenkel zur Befestigung eines weiteren Fensterelements an dem Fensterrahmen 4 sein.

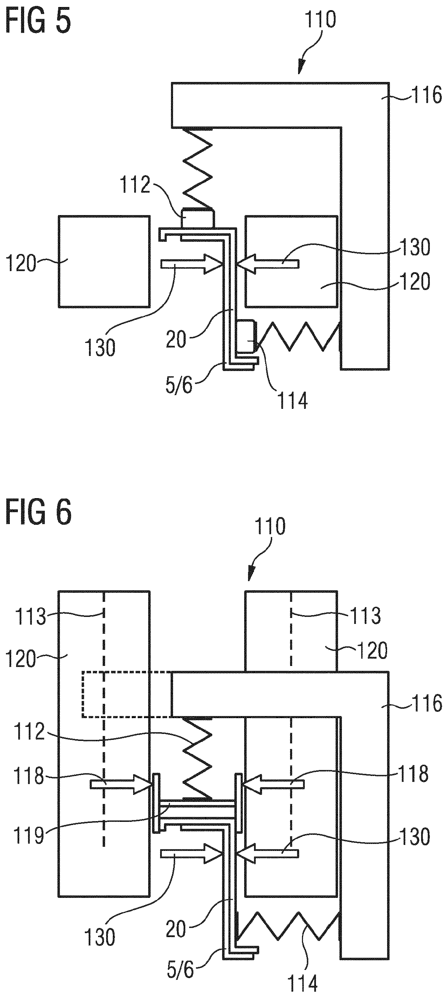

Figur 2 zeigt schematisch einen Ausschnitt des Montagesystems 100, insbesondere den Werkzeughalter 120 an einem freien Ende des Roboterarms 105. Der Werkzeughalter 120 umfasst eine Greifvorrichtung 110, die einen Haltebügel 116 aufweist, der dazu eingerichtet ist, das Profilbauteil 20 von mindestens einer Seite aus zu stützen. In Figur 2 ist der Haltebügel 116 als L-förmiges Element gezeigt, wodurch zwei Anpresseinheiten 112, 114 an jedem Schenkel des Haltebügels 116 angeordnet werden können. Die Anpresseinheiten 112, 114 ermöglichen ein Anpressen des Profilbauteils 20 aus zwei zueinander im Wesentlichen senkrechten Richtungen. Dies wird in den Figuren 5 und 6 noch näher erläutert. Selbstverständlich können der Haltebügel 116 und/oder die Anpresseinheiten 112, 114 auch eine andere Form einnehmen. Beispielsweise kann abhängig von der Form des Profilbauteils 20 der Haltebügel 116 auch U-förmig, V-förmig, bogenförmig, eine Platte oder Ähnliches sein, wobei eine oder mehrere Anpresseinheiten 112, 114 vorgesehen sein können, die jeweils aus einer bestimmten Richtung das Profilbauteil 20 auf das Rahmenstrukturbauteil 5, 6, 7 drücken. Dabei kann jede Anpresseinheit 112, 114 und/oder ein Abschnitt des Haltebügels 116 so ausgerichtet sein, dass eine Antriebskraft der Anpresseinheit 112, 114 senkrecht auf einen Abschnitt des Profilbauteils 20 und/oder senkrecht auf einen Abschnitt des Rahmenstrukturbauteils 5, 6, 7 wirkt. Die Anpresseinheit 112, 114 ist insbesondere dann besonders wirksam, wenn die Abschnitte des Profilbauteils 20 und des Rahmenstrukturbauteils 5, 6, 7 parallel zueinander angeordnet sind und die Antriebskraft senkrecht dazu wirkt.

Die Greifvorrichtung 110 ist in Figur 2 sowohl auf einer Oberseite als auch einer Unterseite des Werkzeughalters 120 dargestellt. Dies kann einerseits dadurch implementiert werden, dass die Greifvorrichtung 110, beispielsweise der Haltebügel 116, durch entsprechende freie Abschnitte des Werkzeughalters 120 von der Oberseite bis zur Unterseite ragt. Alternativ kann die Greifvorrichtung 110 auch zwei Haltebügel 116 umfassen, wobei einer auf der Oberseite und ein anderer auf der Unterseite angeordnet ist. Ebenfalls alternativ kann die Greifvorrichtung 110 auch nur einen Haltebügel 116 umfassen, der auf der Oberseite oder der Unterseite des Werkzeughalters 120 angeordnet ist.

In Figur 2 ist ferner ein Anschlag 30 dargestellt, der an dem Rahmenstrukturbauteil 6 vorgesehen ist. Der Anschlag 30 kann im Vorfeld angebracht werden, zum Beispiel sobald ein oder mehrere Rahmenstrukturbauteile 2, 4, 5, 6, 7 zugänglich ist/sind. Das Profilbauteil 20 kann nun durch den Roboterarm 105 und/oder Werkzeughalter 120 so auf dem Rahmenstrukturbauteil 2, 4, 5, 6, 7 angeordnet werden (aufgesetzt werden), dass das Profilbauteil 20 an dem Anschlag 30 anliegt.

Wie aus Figur 2 erkennbar ist, ist (lediglich als Beispiel) das Profilbauteil 20 so geformt, dass es eine abschnittsweise gekrümmte Seitenkante aufweist. Diese gekrümmte Seitenkante kann nun dafür verwendet werden, an dem Anschlag 30 angelegt zu werden, den Anschlag 30 also teilweise zu umgeben und/oder zu berühren. Der Anschlag 30 hilft in jedem Fall dem Montagesystem 100, die Endposition des Profilbauteils 20 schnell und einfach zu erreichen. Aufgrund der gekrümmten Seitenkante, die an dem Anschlag 30 anliegt, ist lediglich eine Bewegungsrichtung des Profilbauteils 20 frei (wobei die obere horizontale Seitenkante in Figur 2 an dem Anschlag 30 gleiten kann).

Ferner zeigt Figur 2 eine Fixierung des Profilbauteils 20 an dem Rahmenstrukturbauteil 2, 4, 5, 6, 7 durch ein erstes Befestigungsmittel 21. Lediglich beispielhaft ist als erstes Befestigungsmittel 21 eine Niete gezeigt. Alternativ ist jedes Befestigungsmittel 21 einsetzbar, solange es geeignet ist, eine mechanische Verbindung zwischen Profilbauteil 20 und Rahmenstrukturbauteil 2, 4, 5, 6, 7 herzustellen.

Die in Figur 2 gezeigte Position des ersten Befestigungsmittels 21 ist lediglich beispielhaft zu verstehen und kann an jeder anderen Position für Befestigungsmittel (in Figur 2 als Punkte dargestellt) liegen. Wie ebenfalls in Bezug auf die Figuren 5 und 6 noch näher erläutert wird, kann der Werkzeughalter 120 eine Befestigervorrichtung 130 umfassen. Somit kann das Profilbauteil 20 an dem Rahmenstrukturbauteil 2, 4, 5, 6, 7 auch an einer Position fixiert werden, die in Figur 2 durch den Werkzeughalter 120 bzw. den Haltebügel 116 verdeckt ist.

Mit der Fixierung durch das erste (einzige) Befestigungsmittel 21 (und optional durch den Anschlag 30) kann die Greifvorrichtung 110 nun vom Profilbauteil 20 entfernt werden, wie dies in Figur 3 schematisch dargestellt ist. Beispielsweise kann der Haltebügel 116 von dem Profilbauteil 20 wegbewegt werden, wodurch zum Beispiel auch die Anpresseinheiten 112, 114 ihren Druck vom Profilbauteil 20 lösen. Dieses Wegbewegen kann zum Beispiel durch Schienen 113 (siehe Figur 2), die in dem Werkzeughalter 120 vorgesehen sind, bewerkstelligt werden. Die Greifvorrichtung 110 kann in oder auf den Schienen 113 von dem Profilbauteil 20 wegbewegt werden.

Selbstverständlich kann der Haltebügel 116 auch in mehr als eine Richtung von dem Profilbauteil 20 wegbewegt werden, um den Druck darauf zu lösen. In der in Figur 3 gezeigten Anordnung kann nun die Befestigervorrichtung 130 (siehe Figuren 4 6) ein oder mehrere zweite Befestigungsmittel 22 anbringen.

Figur 3 zeigt eine weitere Möglichkeit, einen Anschlag 30 anzubringen. Im Gegensatz zu der Möglichkeit, die in Figur 2 dargestellt ist, wird hier der Anschlag 30 an dem Rahmenstrukturbauteil 6 so angebracht, dass das Profilbauteil 20 nur mit einer Seitenkante daran anliegt. Dies ermöglicht eine gewisse Flexibilität beim Anordnen des Profilbauteils 20 in seiner Endposition und ermöglicht insbesondere einen Toleranzausgleich.

Figur 4 zeigt schematisch wie der Roboterarm 105 den Werkzeughalter 120 schrittweise nach unten bewegt, während die Befestigervorrichtung 130 eine Vielzahl von zweiten Befestigungsmitteln 22 in das Profilbauteil 20 und das Rahmenstrukturbauteil 2, 4, 5, 6, 7 setzt. Selbstverständlich kann die Bewegung auch seitwärts erfolgen, um jede Position für ein Befestigungsmittel zu erreichen. Alternativ oder zusätzlich kann auch der Werkzeughalter 120 dazu eingerichtet sein, sich oder die Befestigervorrichtung 130 zu bewegen, also ohne Bewegung des Roboterarms 105. Ebenfalls alternativ oder zusätzlich kann auch die Befestigervorrichtung 130 dazu eingerichtet sein, relativ zu dem Werkzeughalter 120 in mindestens eine Richtung bewegt zu werden, um die entsprechenden Positionen für Befestigungsmittel 22 anzusteuern.

Figur 5 zeigt schematisch eine Ausgestaltungsvariante eines Werkzeughalters 120 in einer Schnittansicht. Entsprechend den Figuren 1 bis 4 ist der Werkzeughalter 120 neben einem Rahmenstrukturbauteil 2, 4, 5, 6, 7 angeordnet, wobei auf dem Rahmenstrukturbauteil 2, 4, 5, 6, 7 bereits ein Profilbauteil 20 in der Endposition angeordnet ist. Das Profilbauteil 20 wird durch Anpresseinheiten 112, 114 aus zwei Richtungen (senkrecht zueinander) auf das Rahmenstrukturbauteil 2, 4, 5, 6, 7 gepresst. Aufgrund der korrespondierenden L- oder Z-förmigen Querschnitte des Rahmenstrukturbauteils 2, 4, 5, 6, 7 und des Profilbauteils 20 sind zwei Anpresseinheiten 112, 114 ausreichend, um das Profilbauteil 20 in der Endposition zu halten. Die Anpresseinheiten 112, 114 können sich beispielsweise an dem Haltebügel 116 abstützen oder können daran befestigt sein, wobei der Haltebügel 116 zum Beispiel dazu eingerichtet sein kann, in Richtung des Rahmenstrukturbauteils 2, 4, 5, 6, 7 bewegt zu werden, um einen entsprechend hohen Anpressdruck zu erzeugen. Ferner können die Anpresseinheiten 112, 114 ein Federelement umfassen, welches eine Federkraft auf das Profilbauteil 20 ausübt. Alternativ oder zusätzlich können die Anpresseinheiten 112, 114 auch ein aktives Steuerelement aufweisen, welches eine Druckkraft auf das Profilbauteil 20 aufbauen (und gegebenenfalls auch zurücknehmen) kann.

Figur 5 zeigt ferner jeweils ein Anpresskissen oder Polster an jeder Anpresseinheit 112, 114, das auf der Oberfläche des Profilbauteils 20 aufliegt. Anstatt eines Anpresskissens oder zusätzlich dazu kann auch ein Magnet oder Saughalter vorgesehen sein, der das Profilbauteil 20 besser in der Endposition stützt.

Der Werkzeughalter 120 umfasst ferner eine Befestigervorrichtung 130. Diese kann beispielsweise durch einen Bohrer, einen Nietsetzer, einen Schraubsetzer, einen Schrauber, einen Schweißkopf, und/oder eine Klebepistole implementiert sein. Da die Befestigervorrichtung 130 möglichst aus gegenüberliegenden Richtungen gestützt ist und/oder aus gegenüberliegenden Richtungen auf das Rahmenstrukturbauteil 2, 4, 5, 6, 7 und das Profilbauteil 20 einwirken kann, ist der Werkzeughalter 120 in der dargestellten Ausführungsvariante C-förmig oder U-förmig, wobei an dem offenen Ende die Befestigervorrichtung 130 angeordnet ist.

Figur 6 zeigt schematisch eine weitere Ausgestaltungsvariante eines Werkzeughalters 120. Die meisten Elemente des Werkzeughalters 120 aus Figur 5 sind auch in dieser Ausgestaltungsvariante vorhanden. Ein Unterschied zu Figur 5 besteht darin, dass eine Klemmvorrichtung 118, 119 vorgesehen ist. Die Klemmvorrichtung 118 kann optional an gegenüberliegenden Seiten des Werkzeughalters 120 ein elastisches Element sein oder mindestens ein aktives Element, welches auf das Profilbauteil 20 zubewegt werden kann.

Die Klemmvorrichtung 119 kann ebenfalls optional ein bügelförmiges Element sein, wie es in Figur 6 gezeigt ist. Dieses bügelförmige Element kann so ausgestaltet sein, dass es eine Seite des Profilbauteils 20 umgibt und das Profilbauteil 20 darin eingeklemmt. Nach der Befestigung des Profilbauteils 20 an dem Rahmenstrukturbauteil 2, 4, 5, 6, 7 lässt sich die Klemmvorrichtung 118, 119 einfach von dem Profilbauteil 20 durch Überwindung der Klemmkraft abziehen.

Wie in Figur 5 kann auch in dieser Ausgestaltungsvariante mindestens eine Anpresseinheit 112, 114 vorgesehen sein. Zusätzlich kann eine Anpresseinheit 112 die Klemmvorrichtung 119 auf das Profilbauteil 20 pressen.

In Figur 6 ist der Werkzeughalter 120 von seiner Oberseite (Figuren 1 bis 4) gezeigt. Darauf befinden sich optionale Schienen 113 (gestrichelt dargestellt), entlang derer die Greifvorrichtung 110 von dem Profilbauteil 20 weg oder darauf zu bewegt werden kann. Ebenfalls als Optionen ist die Greifvorrichtung 110 in durchgehenden Linien so dargestellt, dass sie nur auf einem Abschnitt (Schenkel) des Werkzeughalters 120 angeordnet ist, und in punktierter (gestrichelter) Linie so dargestellt ist, dass sie auf beiden Abschnitten (Schenkeln) des Fahrzeughalters 120 angeordnet ist.

Im Gegensatz dazu ist in Figur 5 der Werkzeughalter 120 um 90° gedreht, was lediglich optional zu verstehen ist und darlegen soll, dass der Fahrzeughalter, die Greifvorrichtung 110 und die Befestigervorrichtung 130 in jeder beliebigen Position an dem Werkzeughalter 120 befestigt sein können. Selbstverständlich kann auch in dem Beispiel gemäß Figur 5 mindestens eine Schiene 113 (in Figur 5 nicht dargestellt) vorgesehen sein, entlang der die Greifvorrichtung 110 bewegt werden kann.

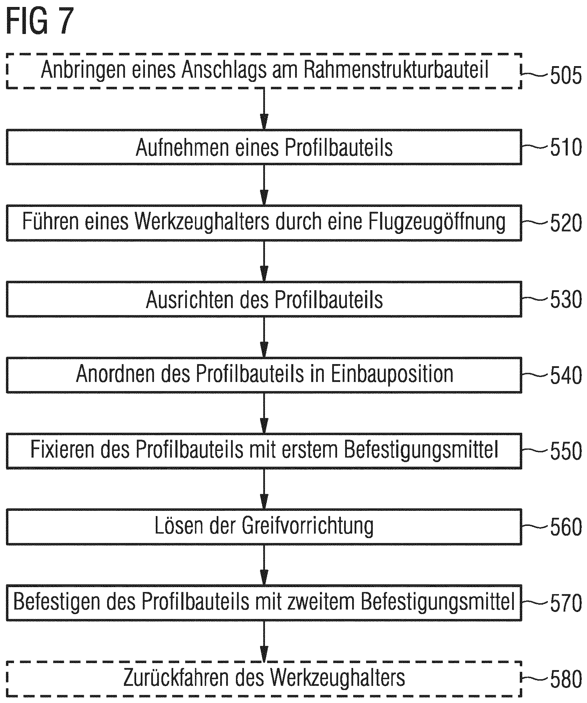

Figur 7 zeigt schematisch ein Ablaufdiagramm eines Verfahrens zur Montage eines Profilbauteils 20. Das Verfahren kann beispielsweise durch eine Steuereinheit 200 (siehe Figur 1) des Montagesystems 100 durchgeführt werden, wobei der Roboterarm 105, der Werkzeughalter 120, die Greifvorrichtung 110 und die Befestigervorrichtung 130 bei der Steuerung durch die Steuereinheit 200 mit einbezogen werden können.

Das Verfahren kann mit einem optionalen Schritt 505 des Anbringens eines Anschlags 30 an dem Rahmenstrukturbauteil 2, 4, 5, 6, 7 beginnen. Dieser Schritt kann unabhängig von dem eigentlichen Beginn des hier beschriebenen Verfahrens durchgeführt werden.

In einem ansonsten ersten Schritt 510 wird das Profilbauteil 20 durch einen Werkzeughalter 120 aufgenommen. Insbesondere kann der Werkzeughalter 120 eine Greifvorrichtung 110 umfassen, die das Profilbauteil 20 aufnimmt. Anschließend wird in Schritt 520 der Werkzeughalter 120 mit dem Profilbauteil 20 durch eine Öffnung 3 in der Außenhaut 2 des Flugzeugs 1 in das Innere des Flugzeugs 1 geführt. Dieses Führen kann insbesondere durch den Roboterarm 105 erfolgen.

Anschließend kann in einem Schritt 530 das Profilbauteil durch den Werkzeughalter 120 relativ zu dem Rahmenstrukturbauteil 2, 4, 5, 6, 7 ausgerichtet werden. Das Ausrichten kann auch durch den Roboterarm 105 ausgeführt werden oder sowohl durch den Roboterarm 105 als auch den Werkzeughalter 120.

Ferner wird das Profilbauteil 20 in Schritt 540 in einer Einbauposition auf dem Rahmenstrukturbauteil 2, 4, 5, 6, 7 angeordnet und in einem nachfolgenden Schritt 550 an dem Rahmenstrukturbauteil 2, 4, 5, 6, 7 in der Einbauposition fixiert. Das Fixieren erfolgt durch ein erstes Befestigungsmittel 21.

Der optionale Schritt 505 des Anbringens eines Anschlags 30 kann auch vor dem Schritt 530 und/oder vor dem Schritt 540 durchgeführt werden.

Anschließend wird in Schritt 560 die Greifvorrichtung 110 von dem Profilbauteil 20 gelöst. Beispielsweise kann die Greifvorrichtung 110 sich von dem Profilbauteil 20 entfernen und/oder eine oder mehrere Anpresseinheiten 112, 114 von den Profilbauteil 20 entfernen.

Nun kann in Schritt 570 das Profilbauteil 20 an dem Rahmenstrukturbauteil 2, 4, 5, 6, 7 mit mindestens einem zweiten Befestigungsmittel 22 befestigt werden. Dabei kann das erste und zweite Befestigungsmittel 21, 22 durch eine an dem Werkzeughalter 120 angeordnete Befestigervorrichtung 130 angebracht werden. Ferner können das erste und zweite Befestigungsmittel 21, 22 baugleich sein, also vom selben Typ sein. Zum Beispiel kann die Befestigervorrichtung 130 dazu eingerichtet sein, nur einen Typ von Befestigungsmittel 21, 22 anzubringen, wobei sie zuerst das erste Befestigungsmittel 21 zum Fixieren des Profilbauteils 20 und anschließend das zweite Befestigungsmittel 22 (oder viele zweite Befestigungsmittel 22) setzt.

Schließlich kann in einem optionalen Schritt 580 der Werkzeughalter 120 durch die Öffnung 3 zurückgefahren werden. Das Verfahren kann nun für ein weiteres Profilbauteil 20 wiederholt werden.

## Patentansprüche

1. Verfahren zur Montage eines Profilbauteils (20) auf ein innenliegendes Rahmenstrukturbauteil (2, 4, 5, 6, 7) eines Flugzeugs (1), wobei das Verfahren umfasst:
Aufnehmen (510) des Profilbauteils (20) durch eine an einem Werkzeughalter (120) angeordnete Greifvorrichtung (110);
Führen (520) des Werkzeughalters (120) durch eine Öffnung (3) in einer Außenhaut (2) des Flugzeugs (1) in das Innere des Flugzeugs (1), wobei das Führen (520) des Werkzeughalters (120) durch einen Roboterarm (105) erfolgt;
Ausrichten (530) des Profilbauteils (20) durch den Werkzeughalter (120) relativ zu dem Rahmenstrukturbauteil (2, 4, 5, 6, 7);
Anordnen (540) des Profilbauteils (20) in einer Einbauposition auf dem Rahmenstrukturbauteil (2, 4, 5, 6, 7);
Fixieren (550) des Profilbauteils (20) an dem Rahmenstrukturbauteil (2, 4, 5, 6, 7) in der Einbauposition mit einem ersten Befestigungsmittel (21);
Lösen (560) der Greifvorrichtung (110) von dem Profilbauteil (20); und
Befestigen (570) des Profilbauteils (20) an dem Rahmenstrukturbauteil (2, 4, 5, 6, 7) mit mindestens einem zweiten Befestigungsmittel (22),
wobei das erste und zweite Befestigungsmittel (21, 22) durch eine an dem Werkzeughalter (120) angeordnete Befestigervorrichtung (130) angebracht wird.

2. Verfahren gemäß Anspruch 1, ferner umfassend:
Anbringen (535) eines Anschlags (30) an dem Rahmenstrukturbauteil (2, 4, 5, 6, 7) vor dem Ausrichten (530) des Profilbauteils (20) und/oder vor dem Anordnen (540) des Profilbauteils (20) in der Einbauposition.

3. Verfahren gemäß Anspruch 2, wobei das Anbringen (535) des Anschlags (30) durch die Befestigervorrichtung (130) erfolgt, und/oder wobei der Anschlag (30) ein Befestigungsmittel ist.

4. Verfahren gemäß einem der Ansprüche 1 bis 3, ferner umfassend:
Zurückfahren (580) des Werkzeughalters (120) durch die Öffnung (3).

5. Verfahren gemäß einem der Ansprüche 1 bis 4, wobei das Profilbauteil (20) in der Einbauposition das Rahmenstrukturbauteil (5) mit einem weiteren Rahmenstrukturbauteil (6, 7) verbindet, und/oder das Rahmenstrukturbauteil (2, 4, 5, 6, 7) verstärkt, und/oder ein Anschlusselement an dem Rahmenstrukturbauteil (2, 4, 5, 6, 7) für eine Flugzeugkomponente bildet.

6. Montagesystem (100) zur Montage eines Profilbauteils (20) auf ein innenliegendes Rahmenstrukturbauteil (2, 4, 5, 6, 7) eines Flugzeugs (1), wobei das Montagesystem umfasst:
einen Roboterarm (105), der außerhalb des Flugzeugs (1) zu installieren ist;
einen Werkzeughalter (120), der an einem freien Ende des Roboterarms (105) angeordnet ist;
eine Greifvorrichtung (110), die an dem Werkzeughalter (120) angeordnet ist;
eine Befestigervorrichtung (130), die an dem Werkzeughalter (120) angeordnet ist und dazu eingerichtet ist, Befestigungsmittel (21, 22) anzubringen; und
eine Steuereinheit (200), die mit dem Roboterarm (105), dem Werkzeughalter (120), der Greifvorrichtung (110) und der Befestigervorrichtung (130) gekoppelt ist und dazu eingerichtet ist, das Verfahren gemäß einem der Ansprüche 1 bis 5 durchzuführen.

7. Montagesystem (100) gemäß Anspruch 6, wobei die Greifvorrichtung (110) umfasst:
einen Haltebügel (116), der dazu eingerichtet ist, dass Profilbauteil (20) von mindestens einer Seite zu stützen und in der Einbauposition auf dem Rahmenstrukturbauteil (2, 4, 5, 6, 7) zu halten, und/oder
mindestens eine Anpresseinheit (112, 114), die dazu eingerichtet ist, das Profilbauteil (20) in der Einbauposition auf das Rahmenstrukturbauteil (2, 4, 5, 6, 7) zu pressen, und/oder
mindestens eine Klemmvorrichtung (118, 119), die dazu eingerichtet ist, das Profilbauteil (20) lösbar in der Greifvorrichtung (110) zu halten, und/oder
einen Magneten, und/oder
einen Saughalter.

8. Montagesystem (100) gemäß Anspruch 6 oder 7, wobei die Befestigervorrichtung (122) einen Bohrer, einen Nietsetzer, einen Schraubsetzer, einen Schrauber, ein Schweißkopf, und/oder eine Klebepistole umfasst.

## Claims

1. Method for mounting a profile component (20) on an internal frame structural component (2, 4, 5, 6, 7) of an aircraft (1), wherein the method comprises:
picking-up (510) of the profile component (20) by a gripping device (110) arranged on a tool holder (120);
guidance (520) of the tool holder (120) through an opening (3) in an outer skin (2) of the aircraft (1) into the interior of the aircraft (1), wherein the guidance (520) of the tool holder (120) is carried out by a robot arm (105);
alignment (530) of the profile component (20) by the tool holder (120) relative to the frame structural component (2, 4, 5, 6, 7);
arrangement (540) of the profile component (20) in an installed position on the frame structural component (2, 4, 5, 6, 7);
fixing (550) of the profile component (20) to the frame structural component (2, 4, 5, 6, 7) in the installed position by a first fastening means (21);
release (560) of the gripping device (110) from the profile component (20); and
fastening (570) of the profile component (20) to the frame structural component (2, 4, 5, 6, 7) by at least one second fastening means (22),
wherein the first and second fastening means (21, 22) is attached by a fastener device (130) arranged on the tool holder (120).

2. Method according to Claim 1, further comprising:
attachment (535) of a stop (30) to the frame structural component (2, 4, 5, 6, 7) before the alignment (530) of the profile component (20) and/or before the arrangement (540) of the profile component (20) in the installed position.

3. Method according to Claim 2, wherein the attachment (535) of the stop (30) is carried out by the fastener device (130) and/or wherein the stop (30) is a fastening means.

4. Method according to one of Claims 1 to 3, further comprising:
retraction (580) of the tool holder (120) through the opening (3).

5. Method according to one of Claims 1 to 4, wherein in the installed position the profile component (20) connects the frame structural component (5) to a further frame structural component (6, 7) and/or reinforces the frame structural component (2, 4, 5, 6, 7), and/or forms a connecting element on the frame structural component (2, 4, 5, 6, 7) for an aircraft component.

6. Mounting system (100) for mounting a profile component (20) on an internal frame structural component (2, 4, 5, 6, 7) of an aircraft (1), wherein the mounting system comprises:
a robot arm (105) which is to be installed outside the aircraft (1);
a tool holder (120) which is arranged at a free end of the robot arm (105);
a gripping device (110) which is arranged on the tool holder (120);
a fastener device (130) which is arranged on the tool holder (120) and is designed to attach fastening means (21, 22); and
a control unit (200) which is coupled to the robot arm (105), the tool holder (120), the gripping device (110) and the fastener device (130) and is designed to carry out the method according to one of Claims 1 to 5.

7. Mounting system (100) according to Claim 6, wherein the gripping device (110) comprises:
a retaining bracket (116) which is designed to support the profile component (20) from at least one side and to hold the profile component on the frame structural component (2, 4, 5, 6, 7) in the installed position, and/or
at least one pressing unit (112, 114) which is designed to press the profile component (20) onto the frame structural component (2, 4, 5, 6, 7) in the installed position, and/or
at least one clamping device (118, 119) which is designed to hold the profile component (20) releasably in the gripping device (110), and/or
a magnet, and/or
a suction holder.

8. Mounting system (100) according to Claim 6 or 7, wherein the fastener device (122) comprises a drill, a riveting tool, a screwing tool, a screwdriver, a welding head, and/or an adhesive gun.

## Revendications

1. Procédé de montage d'un composant profilé (20) sur un composant structurel de cadre intérieur (2, 4, 5, 6, 7) d'un aéronef (1), le procédé comprenant:
la réception (510) du composant profilé (20) par un dispositif de préhension (110) agencé sur un porte-outil (120);
le guidage (520) du porte-outil (120) à travers une ouverture (3) dans une peau extérieure (2) de l'aéronef (1) vers l'intérieur de l'aéronef (1), le guidage (520) du porte-outil (120) étant effectué par un bras de robot (105);
l'orientation (530) du composant profilé (20) par le porte-outil (120) par rapport au composant structurel de cadre (2, 4, 5, 6, 7);
l'agencement (540) du composant profilé (20) dans une position d'installation sur le composant structurel de cadre (2, 4, 5, 6, 7);
la fixation (550) du composant profilé (20) au composant structurel de cadre (2, 4, 5, 6, 7) dans la position d'installation avec un premier moyen de fixation (21); le détachement (560) du dispositif de préhension (110) du composant profilé (20); et
la fixation (570) du composant profilé (20) au composant structurel de cadre (2, 4, 5, 6, 7) avec au moins un deuxième moyen de fixation (22),
les premier et deuxième moyens de fixation (21, 22) étant mis en place par un dispositif de fixation (130) agencé sur le porte-outil (120).

2. Procédé selon la revendication 1, comprenant en outre:
la mise en place (535) d'une butée (30) sur le composant structurel de cadre (2, 4, 5, 6, 7) avant l'orientation (530) du composant profilé (20) et/ou avant l'agencement (540) du composant profilé (20) dans la position d'installation.

3. Procédé selon la revendication 2, dans lequel la mise en place (535) de la butée (30) est réalisée par le dispositif de fixation (130), et/ou dans lequel la butée (30) est un moyen de fixation.

4. Procédé selon l'une quelconque des revendications 1 à 3, comprenant en outre:
le recul (580) du porte-outil (120) à travers l'ouverture (3).

5. Procédé selon l'une quelconque des revendications 1 à 4, dans lequel le composant profilé (20), dans la position d'installation, relie le composant structurel de cadre (5) à un autre composant structurel de cadre (6, 7), et/ou renforce le composant structurel de cadre (2, 4, 5, 6, 7), et/ou forme un élément de raccordement sur le composant structurel de cadre (2, 4, 5, 6, 7) pour un composant d'aéronef

6. Système de montage (100) d'un composant profilé (20) sur un composant structurel de cadre intérieur (2, 4, 5, 6, 7) d'un aéronef (1), le système de montage comprenant:
un bras de robot (105) à installer à l'extérieur de l'aéronef (1);
un porte-outil (120) agencé à une extrémité libre du bras de robot (105);
un dispositif de préhension (110) agencé sur le porte-outil (120);
un dispositif de fixation (130) agencé sur le porte-outil (120) et adapté pour mettre en place des moyens de fixation (21, 22); et
une unité de commande (200) couplée au bras de robot (105), au porte-outil (120), au dispositif de préhension (110) et au dispositif de fixation (130), et adaptée pour mettre en œuvre le procédé selon l'une quelconque des revendications 1 à 5.

7. Système de montage (100) selon la revendication 6, dans lequel le dispositif de préhension (110) comprend:
un étrier de maintien (116) qui est adapté pour soutenir le composant profilé (20) depuis au moins un côté et pour le maintenir dans la position d'installation sur le composant structurel de cadre (2, 4, 5, 6, 7), et/ou
au moins une unité de pression (112, 114), qui est conçue pour presser le composant profilé (20) dans la position d'installation sur le composant structurel de cadre (2, 4, 5, 6, 7), et/ou
au moins un dispositif de serrage (118, 119), qui est adapté pour maintenir de manière amovible le composant profilé (20) dans le dispositif de préhension (110), et/ou
un aimant, et/ou
un support à ventouse.

8. Système de montage (100) selon la revendication 6 ou 7, dans lequel le dispositif de fixation (122) comprend une perceuse, une poseuse de rivets, une poseuse de vis, une visseuse, une tête de soudage, et/ou un pistolet à colle.
